# EUROPEAN PATENT APPLICATION

(11) **EP 4 822 218 A1**
(43) Date of publication of application: **14.10.2026**
(21) Application number: 24899145.7
(22) Date of filing: 22.05.2024
(51) Int. Cl.: F16H 57/027, F16H 57/029, F16H 57/021, F16H 57/023, H02K 7/116

(54) **PRESSURE RELIEF STRUCTURE FOR POWER SYSTEM ENCLOSURE**

(30) Priority: 04.12.2023 CN 202323289593 U
(71) Applicant: CHONGQING QIULONG TECHNOLOGY CO., LTD., Chongqing 400084 (CN)
(72) Inventor: LI, Bing, Chongqing 400084 (CN); MA, Ke, Chongqing 400084 (CN); ZHAN, Huahai, Chongqing 400084 (CN); GAO, You, Chongqing 400084 (CN)
(74) Representative: Inchingalo, Simona
(86) International application number: PCT/CN2024/094642
(87) International publication number: WO 2025/118493

(57) **Abstract**

A pressure relief structure for a power system enclosure. Without changing the size of an original transmission case and a sealed connection processing structure, a pressure relief channel (4) and a pressure relief hole (3) are provided to implement communication between the interior of a transmission case housing (2) and the interior of a motor housing (1), and the motor housing is provided with a ventilation valve. When a power system operates, the internal pressure of an original motor is less than the internal pressure of the transmission case. When the interior of the transmission case housing is communicated with the interior of the motor housing, pressure gas in the transmission case housing can be conveyed into the motor housing by means of the pressure relief channel and the pressure relief hole. Compared with an internal completely independent transmission case housing, the internal pressure of the transmission case housing is reduced, and the internal pressure of the transmission case may have a larger pressure relief space, thereby avoiding overflow and leakage of lubricating oil due to an excessive internal pressure. Moreover, the motor housing is provided with the ventilation valve, which can ensure normal operation. The stability of operation of the power system is improved, no external structural member is additionally provided, the improvement cost is low, and the effect is good.

## Description

### Technical Field

The present invention belongs to the technical field of vehicle power systems, and particularly relates to a pressure relief structure for a power system enclosure.

### Background

Currently, a power system of an electric motorcycle is mostly disposed in the middle of a vehicle frame, and the power system mainly comprises a motor and a transmission case, two opposite faces of a housing of the motor and a housing of the transmission case are respectively an output end surface of the housing of the motor and an input end surface of the housing of the transmission case, an output port and an input port are respectively arranged on the output end surface and the input end surface in a penetrating manner, and the output port and the input port are coaxial, the motor shaft extends into the housing of the transmission case and is in transmission connection with the transmission shaft. In a power system, the sealing treatment level of the transmission case is generally lower than or approximately the same as that of the motor, with the increase and temperature rise of the rotational speed of the transmission shaft in the transmission case, the internal pressure of the transmission case is increased at the power system running, and the problem that the lubricating oil in the transmission case overflows from the sealed connection position between a main body of the transmission case and an end cover, the sealed connection position between the end cover of the transmission case and the transmission shaft through the end cover, and even from the sealed connection position between the input end surface of the transmission case and the output end surface of the motor also occurs, as a result, the lubricating oil in the housing of the transmission case is leaked, and the improvement may be further optimized.

If a check valve (also referred to as a ventilation valve) similar to that used for pressure relief on the housing of the motor is arranged on the housing of the transmission case, the check valve fails because the transmission case is prone to be contaminated due to the large amount of lubricating oil therein. Hence, in practice, more means are used to directly communication with an air duct via an opening of a gearbox, and then guide a free end of the air duct to a part which does not affect the appearance. In this way, the air duct is an external exposure member, and is vulnerable to damage, polluting and falling off, and even absorbs water into the gearbox due to the change of air pressure, which has many disadvantages.

### Summary

In view of the described disadvantages of the related art, some embodiments of the present invention aim to provide a pressure relief structure for a power system enclosure, which solves the technical problem that lubricating oil is likely to leak due to an excessively high internal pressure of a transmission case at present, and achieves the effect of improving the operation stability of the power system.

In order to solve the described technical problem, some embodiments of the present invention adopt the following technical solution:
A pressure relief structure for a power system enclosure, including a power system, the power system including a motor and a transmission case, one side surface of a housing of the motor faces and is connected to one side surface of a housing of the transmission case, and another side surface of the housing of the motor is an output end surface, one side surface of the housing of the transmission case is an input end surface, and an output port and an input port are respectively arranged on the output end surface and the input end surface in a penetrating manner, a motor shaft of the motor extends into the housing of the transmission case via the output port and the input port and is in transmission connection with a transmission shaft of the transmission case;
a pressure relief hole in communication with an interior of the housing of the motor is formed on the output end surface in a penetrating manner; a pressure relief channel is formed in a housing wall of the housing of the transmission case; two ends of the pressure relief channel are respectively a first channel port and a second channel port; the first channel port is located on an inner wall of the housing of the transmission case so as to enable the pressure relief channel to communicate with the interior of the housing of the transmission case; and the second channel port is located on the input end surface and communicates with the pressure relief hole; a sealing portion is provided between the output end surface and the input end surface outside the second channel port and the pressure relief hole.

In an embodiment, a cross section of the pressure relief channel is circular, and an inner diameter of the pressure relief channel increases from the first channel port to the second channel port.

In an embodiment, the transmission shaft is perpendicular to the motor shaft; the housing of the transmission case is divided along an axial direction of the transmission shaft into a main body having an opening and an end cover for closing the opening; the output end surface is located on the main body; the pressure relief channel is provided in a housing wall of the main body and includes an connecting segment and a conduction segment which are vertically connected; a free end of the connecting segment is a first channel port; a free end of the conduction segment is a second channel port; and the connecting segment is in a same direction as the transmission shaft and is opposite the opening.

In an embodiment, a hyperboloid gear is respectively provided on the transmission shaft and the motor shaft and meshed to achieve a transmission connection.

In an embodiment, one end of the transmission shaft rotates through the end cover and extends out of the housing of the transmission case, and the other end of the transmission shaft is rotatably provided in a support hole provided on the inner wall of the main body along the axial direction of the transmission shaft; and the first channel port is located on a bottom face of the support hole and is in communication with the interior of the housing of the transmission case through the support hole.

In an embodiment, a first annular groove is concavely formed on the input end surface; the input port is located inside the first annular groove and is coaxial with the first annular groove; the second channel port is located on a bottom face of the first annular groove; the first annular groove is in communication with the pressure relief hole; and the first annular groove is located inside the sealing portion.

In an embodiment, a second annular groove opposite to the first annular groove is concavely formed on the output end surface, the output port is located inside the second annular groove, the first annular groove and the second annular groove form an annular pressure relief chamber, and the pressure relief hole is provided on a bottom face of the second annular groove, the second channel port is in communication with the pressure relief hole via the pressure relief chamber, and the pressure relief chamber is located inside the sealing portion.

In an embodiment, the sealing portion includes an annular sealing groove provided on the output end surface, an annular sealing gasket is provided in the annular sealing groove, and the annular sealing gasket respectively abuts against a bottom face of the annular sealing groove and the input end surface in a sealing manner.

Compared with the related art, the present invention has the following beneficial effects:
In the pressure relief structure for a power system enclosure of the present invention, without changing the volume of an original transmission case and a sealed connection processing structure, by providing a pressure relief channel and a pressure relief hole to achieve the communication between the interior of the housing of the transmission case and the interior of the housing of the motor, the pressure inside the original motor is less than the internal pressure of the transmission case at the power system running, and after a housing of the transmission case is in communication with the inside of a housing of the motor, enabling the pressure gas in the housing of the transmission case to be delivered to the housing of the motor through the pressure relief channel and the pressure relief hole, compared with a completely independent inner part of the housing of the transmission case, the inner pressure of the housing of the transmission case is reduced, and the inner pressure of the transmission case may have a larger pressure relief space, thereby preventing the lubricating oil from overflowing and leaking due to an excessively high internal pressure; in addition, a ventilation valve is provided on the housing of the motor, which may ensure the whole normal operation, and is beneficial to improving the stability of the operation of the power system, without adding an external structural member, thereby improving the cost and achieving a good effect.

When in use, the lubricating oil in the transmission case enters the pressure relief channel and may be stored at the bottom of the pressure relief chamber formed by the first annular groove and the second annular groove, cleaning may be performed regularly (for example, in half a year) during maintenance and maintenance, and lubricating oil in a transmission case is supplemented, and even lubricating oil is delivered into the housing of the motor through the pressure relief hole, due to the large internal space of the housing of the motor, the stator and rotor of the motor also needs to be lubricated, which does not affect the operation of the motor. There is no need for an exposed air duct outside the transmission case, and many of the disadvantages thereof are eliminated.

### Brief Description of the Drawings

Fig. 1 is a perspective view of a power system in an embodiment;
Fig. 2 is a front view of the power system in an embodiment;
Fig. 3 is a schematic cross-sectional view along line A-A in Fig. 2;
   the housing of the motor 1, the housing of the transmission case 2, the pressure relief hole 3, the pressure relief channel 4, the first channel port 5, the second channel port 6, the transmission shaft 7, the main body 8, the end cover 9, the connecting segment 10, the conduction segment 11, the first annular groove 14, the second annular groove 15, the motor shaft 17, and the sealing ring 19.

### Detailed Description of the Embodiments

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the embodiments to be described are a part rather than all of the examples of the present invention. The components of the utility model embodiments generally described and illustrated in the figures herein may be arranged and designed in a variety of different configurations. Therefore, the following detailed description of the embodiments of the present invention as provided in the accompanying drawings is not intended to limit the scope of the present invention as claimed, but is merely representative of selected examples of the present invention. All other embodiments obtained by a person of ordinary skill in the art based on the embodiments of the present invention without creative efforts shall belong to the scope of protection of the present invention.

It should be noted that like reference numerals and letters refer to like items in the following figures, and thus, once an item is defined in each figure, it is not necessary to further define and explain it in subsequent figures. In the description of the present invention, it should be noted that the orientation or position relations indicated by the terms "center", "upper", "lower", "left", "right", "vertical", "horizontal", "inner", "outer", etc. are based on the orientation or position relations shown in the figures, or a bearing or position relationship of the product of the utility model which is conventionally placed when the product is used, which is only used for the convenience of describing the utility model and simplifying the description, rather than indicate or imply that a device or element referred to must have a particular orientation, be constructed and operated in a particular orientation, therefore, it cannot be understood that the present invention is limited thereto. In addition, the terms "first", "second", "third", 'and the like are used merely to distinguish between descriptions and are not to be construed as indicating or implying relative importance. Furthermore, the terms "horizontal", "vertical", etc. do not imply that the parts are required to be absolutely horizontal or vertical, but rather may be slightly tilted. For example, "horizontal" merely means that the direction is more horizontal relative to "vertical", and does not mean that the structure must be completely horizontal, but may be slightly inclined. In the description of the present invention, it should also be noted that, unless specified or limited otherwise, the terms "set", "install", "connected", and "connection" should be understood broadly, and may be, for example, fixed connections, detachable connections, or integral connections; may also be mechanical or electrical connections; may also be direct connections or indirect connections via intervening structures, and may also be inner communications of two elements. A person of ordinary skill in the art may understand the specific meanings of the foregoing terms in the present invention according to specific situations.

### Embodiment:

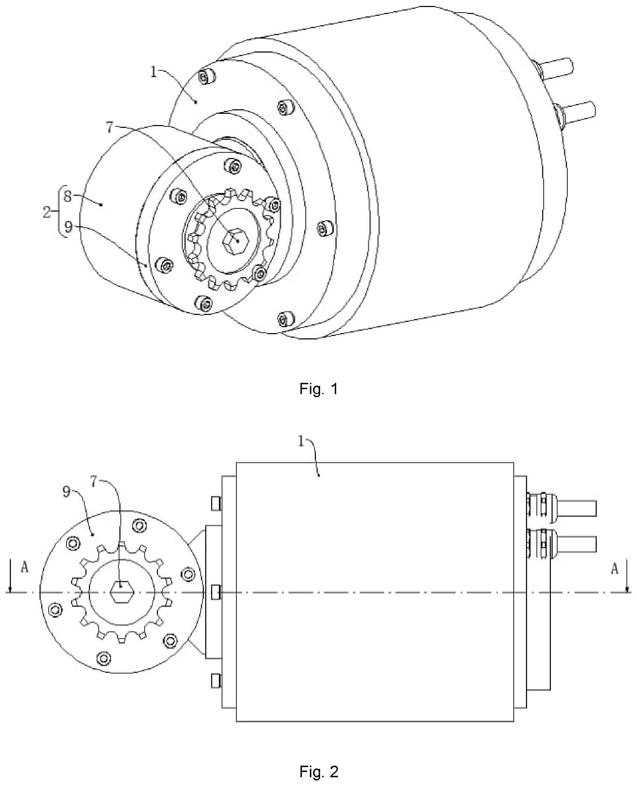

Refer to Figs. 1, 2 and 3, a pressure relief structure for a power system enclosure, including a power system, the power system including a motor and a transmission case, a box body of power system includes a housing of the motor 1 and a housing of the transmission case 2, in which one side surface of the housing of the motor 1 faces to one side surface of the housing of the transmission case 2 and is connected in a sealed manner, another side surface of the housing of the motor 1 is an output end surface, and one side surface of the housing of the transmission case 2 is an input end surface, an output port and an input port, arranged coaxially with each other, are respectively formed on the output end surface and the input end surface in a penetrating manner, and a motor shaft 17 of the motor extends into the housing of the transmission case 2 via the output port and the input port and is in transmission connection with a transmission shaft 7 of the transmission case;

A pressure relief hole 3 in communication with an interior of a housing of the motor 1 is provided on the output end surface in a penetrating manner, and a pressure relief channel 4 isolated from the outside is provided on the housing of the transmission case 2, two ends of the pressure relief channel 4 are respectively a first channel port 5 and a second channel port 6, the first channel port 5 being located on an inner wall of the housing of the transmission case 2 so as to communicate the pressure relief channel 4 with the inside of the housing of the transmission case 2, the second channel port 6 is located on the input end surface and communicates with the pressure relief hole 3; a sealing portion is provided between the output end surface and the input end surface outside the second channel port 6 and the pressure relief hole 3.

According to the pressure relief structure for a power system enclosure of the present invention, the pressure relief hole 3 is provided on the output end surface of the housing of the motor 1 which is connected to the input end surface of the housing of the transmission case 2 in a sealed manner, the pressure relief hole 3 is in communication with the interior of the housing of the motor 1, a pressure relief channel 4 isolated from the outside is provided on the housing of the transmission case 2, and two ends of the pressure relief channel 4 are respectively in communication with the interior of the housing of the transmission case 2 and the pressure relief hole 3; in the case of not changing the volume of the original transmission case and the sealed connection processing structure, the communication between the housing of the transmission case 2 and the inside of a housing of the motor 1 is achieved by providing the pressure relief channel 4 and the pressure relief hole 3, when the power system operates, the internal pressure of the original motor is less than the internal pressure of the transmission case, and after the housing of the transmission case 2 is in communication with the housing of the motor 1, so that the pressure gas in the housing of the transmission case 2 may be delivered to the housing of the motor 1 through the pressure relief channel 4 and the pressure relief hole 3, compared with a completely independent inner part of the housing of the transmission case 2, the inner pressure of the housing of the transmission case 2 is reduced, and the inner pressure of the transmission case may have a larger pressure relief space, thereby preventing the lubricating oil from overflowing and leaking due to an excessively high internal pressure; in addition, a ventilation valve is arranged on the housing of the motor, so that the internal pressure of the motor is prevented from being too high after a long-time operation, and at the same time, the pressure of the transmission case may also be released, thereby guaranteeing the whole normal operation, and being beneficial to improving the stability of the operation of the power system.

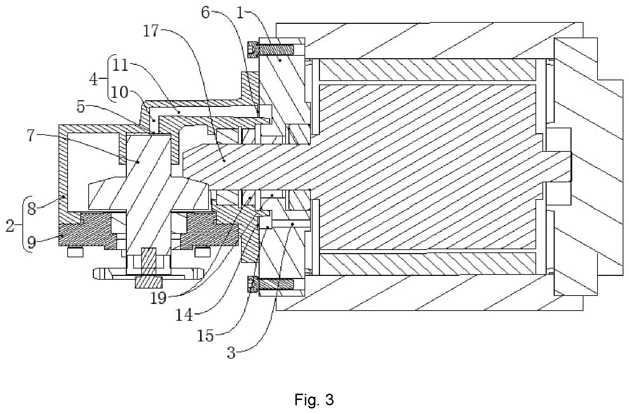

Refer to Figs. 2 and 3, a cross section of the pressure relief channel 4 is circular and has an inner diameter increasing from the first channel port 5 to the second channel port 6; in this way, even if the lubricating oil enters the pressure relief channel 4 from the first channel port 5, the pressure relief channel 4 is not easily blocked.

Refer to Figs. 2 and 3, the transmission shaft 7 is perpendicular to the motor shaft 17, the housing of the transmission case 2 is divided along an axial direction of the transmission shaft 7 into a main body 8 having an opening and an end cover 9 for closing the opening, and the output end surface is located on the main body 8; the pressure relief channel 4 is provided on the main body 8 and includes a connecting segment 10 and a conduction segment 11 which are vertically connected, a free end of the connecting segment 10 is the first channel port 5; a free end of the conduction segment 11 is the second channel port 6, and the connecting segment 10 is in the same direction as the transmission shaft 7 and opposite the opening; in this way, firstly, the connecting segment 10 and the transmission shaft 7 are in the same direction, so that the first channel port 5 is in the axial direction of the transmission shaft 7, and when the components on the transmission shaft 7 stir the lubricating oil, the lubricating oil does not easily enter the pressure relief channel 4 from the first channel port 5; secondly, the pressure relief channel 4 is divided into two sections, the connecting segment 10 may be drilled on the inner wall of the main body 8 through the opening, the conduction segment 11 is directly drilled from the input end surface, and the two ends are drilled in sections, which helps reduce the difficulty in processing the pressure relief channel 4.

Refer to Figs. 2 and 3, one end of the transmission shaft 7 rotates and passes through the end cover 9 and extends out of the housing of the transmission case 2, and the other end of the transmission shaft 7 rotates and is provided in a support hole which is arranged on the inner wall of the main body 8 along the axial direction of the transmission shaft 7; the first channel port 5 is located on a bottom surface of the support hole and is in communication with the interior of the housing of the transmission case 2 via the support hole; in this example, a bearing (not shown in the figure) is disposed in the support hole, the bearing is fixedly sleeved on the transmission shaft 7 to enable the transmission shaft 7 to be in rotational fit with the support hole, a spacing forms between an end surface of the transmission shaft 7 and a bottom surface of the support hole, and the first channel port 5 is in communication with the interior of the housing of the transmission case 2 through a gap of the bearing and the support hole.

In this way, the length of the connecting segment 10 with a smaller diameter may be shortened, which helps to reduce the difficulty in processing and forming the pressure relief channel 4 and reduce the possibility of the pressure relief channel 4 being blocked by the lubricating oil.

In addition, when the pressure relief structure for a power system enclosure is mounted on the vehicle frame, the pressure relief channel 4 extends horizontally, the first channel port 5 is higher than the transmission shaft 7, and the pressure relief hole 3 is higher than the motor shaft 17. Refer to Figs. 2 and 3. A first annular groove 14 is concavely formed the input end surface. The input port is located on the inner side of the first annular groove 14 and is coaxial with the first annular groove 14. The second channel port 6 is located on the bottom surface of the first annular groove 14. The first annular groove 14 communicates with the pressure relief hole 3. The first annular groove 14 is located on the inner side of the sealing portion; in this way, it is not necessary to ensure that the pressure relief hole 3 directly faces the second channel port 6, which helps to reduce manufacturing and assembly difficulties.

Refer to Figs. 2 and 3. A second annular groove 15 is concavely formed the output end surface opposite the first annular groove 14. The output port is located on the inner side of the second annular groove 15. The first annular groove 14 and the second annular groove 15 together form an annular pressure relief chamber. The pressure relief hole 3 is provided on the bottom surface of the second annular groove 15. The second channel port 6 communicates with the pressure relief hole 3 through the pressure relief chamber. The pressure relief chamber is located on the inner side of the sealing portion. In this way, providing the first annular groove 14 and the second annular groove 15 not only helps to reduce the weight of the housing of the transmission case 2 and the housing of the motor 1, but also increases the internal space of the pressure relief channel 4, and helps to further reduce the pressure inside the housing of the transmission case 2 when the power system operates.

Refer to Figs. 2 and 3, the sealing portion includes an annular sealing groove provided on the output end surface, an annular sealing gasket (not shown in the figures) is coaxially provided in the annular sealing groove, and the annular sealing gasket is respectively in sealing contact with a bottom face of the annular sealing groove and the input end surface; by providing the sealing portion, the interior of the housing of the transmission case 2 is prevented from communicating with the outside through the junction of the first channel port 5 and the pressure relief hole 3, and leakage of water and lubricating oil inside the housing of the transmission case 2 is prevented.

Refer to Figs. 2 and 3. In this embodiment, one end of the motor shaft 17 facing the output port sequentially passes through the output port and the input port, extending into the interior of the housing of the transmission case 2. The free end of the motor shaft 17 is provided with hypoid teeth to form a hyperboloid gear, which meshes with a hyperboloid gear on the transmission shaft 7, achieving a more stable and quieter transmission connection. A sealing ring 19 is provided in each of the output port and the input port, and the sealing ring 19 is sealingly sleeved on the motor shaft 17, so that the motor shaft 17 sealingly engages with the output port and the input port, respectively.

Finally, it should be noted that, the foregoing embodiments are merely intended to illustrate the technical solutions of the present invention rather than limit the present invention, and persons of ordinary skill in the art should understand that, modifications or equivalent replacements made to the technical solutions of the present invention without departing from the spirit and scope of the present invention shall fall within the scope of the claims of the present invention.

## Claims

1. A pressure relief structure for a power system enclosure, comprising a power system, the power system comprising a motor and a transmission case, one side surface of a housing of the motor faces and is connected to one side surface of a housing of the transmission case, and another side surface of the housing of the motor is an output end surface, one side surface of the housing of the transmission case is an input end surface, and an output port and an input port are respectively arranged on the output end surface and the input end surface in a penetrating manner, a motor shaft of the motor extends into the housing of the transmission case via the output port and the input port and is in transmission connection with a transmission shaft of the transmission case;
a pressure relief hole in communication with an interior of the housing of the motor is formed on the output end surface in a penetrating manner; a pressure relief channel is formed in a housing wall of the housing of the transmission case; two ends of the pressure relief channel are respectively a first channel port and a second channel port; the first channel port is located on an inner wall of the housing of the transmission case so as to enable the pressure relief channel to communicate with the interior of the housing of the transmission case; and the second channel port is located on the input end surface and communicates with the pressure relief hole; a sealing portion is provided between the output end surface and the input end surface outside the second channel port and the pressure relief hole.

2. The pressure relief structure for a power system enclosure as claimed in claim 1, wherein a cross section of the pressure relief channel is circular, and an inner diameter of the pressure relief channel increases from the first channel port to the second channel port.

3. The pressure relief structure for a power system enclosure as claimed in claim 2, wherein the transmission shaft is perpendicular to the motor shaft; the housing of the transmission case is divided along an axial direction of the transmission shaft into a main body having an opening and an end cover for closing the opening; the output end surface is located on the main body; the pressure relief channel is provided in a housing wall of the main body and comprises a connecting segment and a conduction segment which are vertically connected; a free end of the connecting segment is a first channel port; a free end of the conduction segment is a second channel port; and the connecting segment is in a same direction as the transmission shaft and is opposite the opening.

4. The pressure relief structure for a power system enclosure as claimed in claim 3, wherein a hyperboloid gear is respectively provided on the transmission shaft and the motor shaft and meshed to achieve a transmission connection.

5. The pressure relief structure for a power system enclosure as claimed in claim 3, wherein one end of the transmission shaft rotates through the end cover and extends out of the housing of the transmission case, and the other end of the transmission shaft is rotatably provided in a support hole provided on the inner wall of the main body along the axial direction of the transmission shaft; and the first channel port is located on a bottom face of the support hole and is in communication with the interior of the housing of the transmission case through the support hole.

6. The pressure relief structure for a power system enclosure as claimed in claim 1, wherein a first annular groove is concavely formed on the input end surface; the input port is located inside the first annular groove and is coaxial with the first annular groove; the second channel port is located on a bottom face of the first annular groove; the first annular groove is in communication with the pressure relief hole; and the first annular groove is located inside the sealing portion.

7. The pressure relief structure for a power system enclosure as claimed in claim 6, wherein a second annular groove opposite to the first annular groove is concavely formed on the output end surface, the output port is located inside the second annular groove, the first annular groove and the second annular groove form an annular pressure relief chamber, and the pressure relief hole is provided on a bottom face of the second annular groove, the second channel port is in communication with the pressure relief hole via the pressure relief chamber, and the pressure relief chamber is located inside the sealing portion.

8. The pressure relief structure for a power system enclosure as claimed in claim 1, wherein the sealing portion comprises an annular sealing groove provided on the output end surface, an annular sealing gasket is provided in the annular sealing groove, and the annular sealing gasket respectively abuts against a bottom face of the annular sealing groove and the input end surface in a sealing manner.
